Europäisches Patentamt

European Patent Office

Office européen des brevets

(19)

(11) Publication number: **0 305 209**
A1

(12)

# EUROPEAN PATENT APPLICATION

(21) Application number: 88307945.1

(22) Date of filing: 26.08.88

(51) Int. Cl.⁴: **C 04 B 18/26**
C 04 B 16/02, C 04 B 28/02

(30) Priority: 26.08.87 NZ 221573

(43) Date of publication of application:
01.03.89 Bulletin 89/09

(84) Designated Contracting States:
AT BE CH DE ES FR GB GR IT LI LU NL SE

(71) Applicant: **N.Z. FOREST PRODUCTS LIMITED**
O'Rorke Road
Penrose Auckland (NZ)

(72) Inventor: **Weaver, Eric Raymond**
O'Rorke Road
Penrose Auckland (NZ)

Hall, Ronald Berners
O'Rorke Road
Penrose Auckland (NZ)

Woo, June Kee
O'Rorke Road
Penrose Auckland (NZ)

Bullard, Wayne Robert
O'Rorke Road
Penrose Auckland (NZ)

Watson, Robert John
O'Rorke Road
Penrose Auckland (NZ)

(74) Representative: **Carpmael, John William Maurice et al**
**CARPMAELS & RANSFORD 43 Bloomsbury Square**
**London, WC1A 2RA (GB)**

(54) **Fibre composite materials.**

(57) This invention relates to fibre reinforced cement composites and method for forming the same. The method includes the steps of mixing together dry solids and not more than 30% water by mass, based on the total dry solids contents of the mixture. The dry solids include at least one hydraulic cement, chemical pulp lignocellulosic fibre, and at least one selected silicecous substance. The mixture is formed and pressed to a predetermined density and/or dimension, with conditions of humidity thereafter being maintained for a period of time to advance setting reactions in the mixture. A fibre reinforced product is thus produced. The selected silicecous substance is defined as a natural, waste or manufactured material containing at least 50% silica and having a bulk density in descrete particle form of not more than 1200 kg per cubic metre, selected from a defined group.

EP 0 305 209 A1

**Description**

This invention relates to fibre reinforced cement composites and more particularly though not soley to composites and method of manufacturing the same in the form of panels, slabs, moulded bodies and the like for such uses as components for building construction.

A set cement matrix tends to be strong in compression but weak in tension and the use of fibre reinforcement is well known in the art for the purpose of compensating in part for the deficiency in tension, thereby imparting a combination of flexural strength and fracture toughness to the product.

Various forms of hydraulic cement which set by processes including hydration are used in fibre reinforced cement composites because they have attributes of being readily available at relatively low cost, and produce a well proven matrix with acceptable strength and durability. Although ordinary Portland cement (OPC) is probably the most common hydraulic cement used for the purpose, there are many others based upon reactions between calcia, silica and alumina as the main oxides, usually in the form of a ground substantially anhydrous clinker or slag, which sets by processes including hydration when water is introduced.

Until quite recently the fibre reinforcement was almost invariably one of the natural fibrous mineral silicates, including fibrous forms of serpentine and amphibole minerals such as crysotile, amosite, crocidolite, tremolite and actinolite, that is, the fibrous minerals commonly known collectively as asbestos.

Although asbestos has been found very effective for the purpose, it is now well recognised as being injurious to health and is seldom if ever used, except perhaps in some asbestos cement water pipes and for special applications.

Numerous fibre types have been proposed and used, as alternatives to asbestos, including various polymers and steel for example, and one of the more promising is probably carbon fibre, but its cost is prohibitive for general use at present.

Lignocellulose is also used in hydraulic cements, and in many cases gives useful results, especially when chemical pulp lignocellulosic fibre is used.

The use of lignocellulose in hydraulic cement composites can be conveniently divided into two groups : the fibre cement boards similar to asbestos cement, where chemical pulp lignocellulosic fibre is used as an alternative to asbestos, and the wood cement particle boards, where discrete wood particles are cemented together to provide panels which are usually somewhat thicker than the former type, and contain larger amounts of lignocellulose, more in the nature of a low density filler than as a reinforcement. In the latter example using discrete wood particles, the particles and cement have been found to mix together relatively easily compared with chemical pulp lignocellulosic fibre which until now has required formation of an aqueous slurry to distribute the fibres in the cement.

In the manufacture of fibre cement boards using chemical pulp lignocellulosic fibre, one of the more successful methods so far found has been to subject unbleached kraft pulp fibre to a refining or beating step which results in both fibre shortening and fibrillation, after which it may be used in what is substantially the prior art asbestos cement manufacturing technology, typically employing either the Hatschek or Magnani processes for example. The aqueous slurries from which the product is formed using these processes are difficult to de-water, due mainly to the low drainage rate caused by the fine particle size necessary for satisfactory reaction of the hydraulic cement and silica, these being the main components used.

This results in the boards being formed under quite aggressive and difficult conditions, leading to product problems of both mechanical and chemical origin when lignocellulosic fibres are used. For example, various extractives from the lignocellulose can contaminate the liquid phase of the system, and even in small amounts can seriously affect the cement setting reactions, causing rejects or a deficiency in strength. Another problem seen both in the manufacturing plant, and even once the product has been installed in a building is delamination due to poor inter-lamellar bonding, this originating from the method of sheet formation in the Hatschek process itself. These problems have been found difficult to control, resulting in rejects and loss, and higher than otherwise product costs as a consequence.

Wood cement composites are also produced by processes not unlike those used to form particle board. The wood, in the form of particles, flakes or coarse mechanical pulp fibre is mixed with cement and sufficient water for setting, and then formed and pressed into panels, often held between metal cauls until the cement has set. The discrete wood particles or pulp in this case contains both the lignin and carbohydrate components of the wood and greater amounts of extractives than chemical pulps do. Not only do these interfere with cement setting, but the high pH of the cement can cause degradation by attack of the lignin component of the wood which continues long after the cement has set. We have also seen rot in this type of product when made from Lauan peeler cores as the wood source after several years exterior exposure.

Wood cement particle board processes are of a semi-dry type which largely overcome the formation and drainage problems associated with the Hatschek or Magnani processes, but they do not enable fibre reinforced cement composites using small amounts of chemical pulp lignocellulosic fibre to be produced as the fibre is difficult if not impossible to evenly invest in the cement matrix due to problems such as clumping and balling, even when relatively short fibres are used.

Fibre cement composites have many and varied uses, and can be made from relatively inexpensive raw materials. There is therefore a need for a method of manufacturing said composites which eliminates or

2

minimises some of the foregoing disadvantages and problems, or which at the very least provides the public with a useful choice.

It is an object of this invention to provide method and composition for manufacturing fibre reinforced cement composites.

According to one aspect of this invention there is provided a method of forming fibre reinforced cement composites, including the steps of:

a) preparing a mixture including dry solids and not more than 30% water by mass based upon the total dry solids content of said mixture, said dry solids including at least one hydraulic cement, chemical pulp lignocellulosic fibre and at least one selected siliceous substance;

b) forming and pressing said mixture to predetermined density and/or dimensions; and

c) maintaining conditions of high humidity for sufficient time to advance setting reactions in said mixture to produce a fibre reinforced product.

According to a further aspect of this invention there is provided a method of forming fibre reinforced cement composites including the steps of:

a) preparing a mixture including dry solids and not more than 30% water by mass based upon the total mass of said dry solids, said dry solids including by mass 30% to 60% of at least one hydraulic cement, 4% to 20% chemical pulp lignocellulosic fibre, and 6% to 50% of at least one selected siliceous substance;

b) forming and pressing said mixture to predetermined density and/or dimension, and;

c) maintaining conditions of high humidity for sufficient time to advance setting reactions in said mixture to produce a fibre reinforced product.

According to a still further aspect of this invention there is provided a method of forming fibre reinforced composites including the steps of:

a) preparing a mixture including dry solids and not more than 30% of water by mass based upon the total mass of said dry solids, said dry solids including at least one hydraulic cement at least one selected siliceous substance and chemical pulp lignocellulosic fibre;

b) wherein said mixture is prepared in at least two steps, at least one of said steps including high shear and/or attrition mixing;

c) forming said mixture to predetermined density and/or dimension, and;

d) maintaining conditions of high humidity for sufficient time to advance setting reactions in said mixture to product a fibre reinforced product.

According to a still further aspect of this invention there is provided a method of forming fibre reinforced cement composites including the steps of:

a) preparing a mixture containing dry solids and not more than 30% of water by mass based upon the total mass of said dry solids, said dry solids including at least one hydraulic cement, chemical pulped lignocellulosic fibre at least one selected siliceous substance and at least one further more pozzolanic siliceous substance, being an amorphous silica or macro-amorphous silica, silica sol, silica gel, precipitated silica, biogenic silica and/or pyrogenic silica;

b) forming and pressing said mixture to predetermined density and/or dimension, and

c) maintaining conditions of high humidity for sufficient time to advance setting reactions in said mixture to product a fibre reinforced product.

By definition herein throughout the specification and claims of this invention, "hydraulic cement" is a mineral binder material containing silica with calcia and/or alumina which sets or solidifies by process including hydration when water is introduced, and which includes conventional hydraulic cements, examples of which are:

Ordinary Portland Cement (OPC) as described in British Standard No.12, 1987.

Rapid-hardening Portland Cement as described in British Standard No.12, 1978.

Sulphate-resisting Portland Cement as described in British Standard No.4027, 1980 (including low alkali types described therein).

Ultra-high early strength cement, which is a more finely ground Portland Cement usually having a higher proportion of gypsum compared with Ordinary Portland Cement.

Low-head Portland Cement as described in British Standard No.1370, 1979.

White Portland Cement as described in British Standard No.12, 1978.

Portland-blast furnace Cement, as described in British Standard No. 146, 1973.

Low-heat Portland-blast furnace Cement, as described in British Standard No.4246, 1974.

Super-sulphated Cement, as described in British Standard No.4248, 1972.

High-alumina cement as described in British Standard No. 915,1972.

Pozzolanic cements which satisfy the test for pozzolanicity described in British Standard 4550, 1978, (Part 2, Section 15).

Any other cement (and combinations or mixtures of the above cement examples) containing silica with calcia and/or alumina which set or solidify by processes including hydration when water is introduced.

Examples only of such hydraulic cement manufactured or available in New Zealand are those manufactured to New Zealand Standards No. 3122-1974 and/or No.3123-1974, such as Wilsons Star and Wilsons Wilsonite rapid hardening (Wilsons (NZ) Portland Cement Limited) for example, and various imported hydraulic cements such as high alumina Cement Fondu supplied by Lefarge Fondu International, and manufactured to French Standard (FNOR) P15401 and/or P15403 for example.

EP 0 305 209 A1

Any hydraulic cement or mixture of hydraulic cements containing silica, with calcia and/or alumina, which set or solidify by processes including hydration when water is introduced may be used in the present invention however.

Preferred hydraulic cements for use in the present invention are Ordinary Portland Cement, Rapid hardening Portland Cement, Portland-blast furnace Cement and Low-heat Portland-blast furnace Cement, and high-alumina cement, and mixtures of these cements.

By definition herein throughout the specification and claims defining this invention, "selected siliceous substance" is a natural waste or manufactured material containing at least 50% silica and having a bulk density in discrete particle form of not more than 1200 kg per cubic meter, selected from perlite, shirazu, pumice, volcanic tuff, diatomite, pozzolan, fly ash floaters, cenospheres, pyrogenic silica, silica fume, silica sol, silica gel, precipitated silica, biogenic silica and mixtures thereof.

Preferred selected siliceous substance for use in the present invention is perlite, shirazu, pumice, volcanic tuff, diatomite or pozzolan and mixtures of these substances, which preferably but not essentially are calcined prior to use by heat treating to a temperature of at least 450°C.

Throughout the specification and claims of this invention reference is made to the need to maintain conditions of high humidity for sufficient time to advance setting reactions in the mixture following a forming step, it being appreciated that by definition herein "hydraulic cement" sets or solidifies by processes including hydration when water is introduced. It will also be appreciated that the mixtures used in the present invention are characterised in several ways, one of which is that they contain not more than 30% water by mass based upon the total mass of the dry solids (which include hydraulic cement) of the mixture.

Since the water content of the mixture is relatively low, and is needed to effect an adequate set or solidification of the hydraulic cement we have found it essential that conditions of high humidity be maintained to prevent or at least minimise loss of the water by drying during the time required for hydration of the hydraulic cement. In the context of the specification and claims of this invention therefore, to maintain conditions of high humidity means to prevent loss of water from the formed mixture due to drying. Conditions of high humidity may be maintained in any convenient way such as containing the formal mixture within a compartment or vessel, or by covering with a flexible impermeable membrane such as a plastic cover for example. In this way the environment adjacent to the formed mixture is maintained at a high humidity and drying is prevented or minimised while hydration of the hydraulic cement advances. Once the mixture is formed, additional water may also be applied, such as by water spray or saturated steam for example. To assist in maintaining conditions of high humidity for sufficient time to advance setting reactions of hydraulic cement present in the mixture.

In the prior art, a common method for the manufacture of non-asbestos sheet has been to form from an aqueous slurry a mixture comprising Ordinary Portland Cement, ground silica and lignocellulosic fibre as the main components, and wherein the fibres are subjected to refining or beating prior to incorporating them into the mix. De-watering is a problem due to low drainage rates of the mixture, and it is usual to build up the product to the required thickness by winding a plurality of layers onto a drum prior to cutting and releasing the sheet.

The method leads to several problems including interference of the cement setting reactions due to contamination of the aqueous phase with extractives, and often poor inter-lamellar bonding between the plurality of layers. After forming, the product is subjected to autoclaving to cause a reaction to occur between the cement and the silica to product the binder matrix. The production plant is extensive, and the autoclaving step is a significant cost of production.

While some water is necessary to hydrate the hydraulic cement, we may look upon the aqueous phase of the slurry as providing a facility for mixing and transporting the components of the composite product.

In attempts to mix these components dry, or with sufficient water only to satisfy hydration of the cement, we have found (as others also have) that it is virtually impossible to invest the fibre evenly in the mixture.

Typically in the prior art the composite contains approximately 6% to 8% by weight of lignocellulosic fibre such as kraft fibre, the remainder being cement and ground silica. The high density of the cement silica mixture compared with the lignocellulosic fibre results in the volumetric ratio of these components being nearer 1:1 even though the fibre component may be only 6% to 8% by weight, and mixing in this high volume of fibre to provide an evenly dispersed mixture is a virtual impossibility. In practice, due to the need to "fluff" the lignocellulosic fibre prior to mixing, the volumetric ratio has been found to be even more adverse than the relative densities of the components would indicate. Our experiments have confirmed the results of most workers, that between 6% and 8% by weight of fibres provides a good combination of flexural strength and fracture toughness to the product, but the furnish of fibres, cement and ground silica has not been prepared from a dry mixture, but with an excess of water followed by a de-watering step.

In the manufacture of fibre reinforced cement composites in accordance with the present invention the essential fibre reinforcement is chemical pulp lignocellulosic fibre which has the advantages of ready availability, cost effectiveness, and durability, these advantages being important to the invention. Chemical pulp lignocellulosic fibre as used in the present invention may be derived from delignification processes employing alkaline and/or sulphite delignifying agents, including the soda, kraft and sulphite processes, and various forms, modifications and combinations of these processes such as the alkaline sulphite process for example. While any chemical pulp lignocellulosic fibre may be used, we have found it advantageous to use such pulp with a relatively low Kappa Number, preferably of not more than 40, and more preferably 30 or less.

In one form of the invention the chemical pulp lignocellulosic fibre is kraft or soda pulp with a Kappa Number

4

of not more than 35. While bleached chemical pulp lignocellulosic fibre may be used we have found this be to by no means essential, and unbleached kraft fibre is a useful cost-effective lignocellulosic fibre for use in the present invention, especially when included within the range 4% to 12% by mass of lignocellulosic fibre on a dry solids basis, although greater amounts in particular may be used in the manufacture of low density products suited to interior uses such as ceiling tiles and wall linings.

Products made in accordance with the present invention are particularly useful for exterior uses such as wall and deck cladding panels, and for roof applications such as slates, tiles, and corrugated sheets, and for these uses a range of between 6% and 8% by mass of lignocellulosic fibre is preferred, although amounts outside this range may be used for special purposes.

In the present invention, an essential component of the mixture from which the product is to be formed is selected siliceous substance (as defined herein). Selected siliceous substance has been found to have several important advantages and functions during the mixing, forming and curing steps of the methods of manufacture and compositions described and claimed herein.

We have found that inclusion of at least one selected siliceous substance having a bulk density of not more than 1200 kg per cubic metre substantially modifies the rheology of the mixture to the extent where it becomes possible to evenly disperse the chemical pulp lignocellulosic fibre without the need for a liquid phase medium in the mixture.

The mixture can be prepared in a substantially dry state with not more than 30% water by mass based upon the to all dry solids content of said mixture compared with the prior art where approximately 94% or more of water on this basis is common prior to the de-watering step. Due to the presence of at least one selected siliceous substance the mixture can be prepared in a substantially dry state, and the need for de-watering is thus avoided, providing considerable commercial advantages. The prior art limitations relating to drainage rate of the mixture are eliminated and the mixture can be formed to the required thickness in a single pass without the need to build up multiple layers, and there is no aqueous phase to contaminate with wood extractives. The manufacturing line becomes more compact, rejects are reduced, and there is no waste water for disposal.

Another advantage or function of selected siliceous substance is that it is reactive with the hydraulic cement in the mixture and assists materially in development of the set cement matrix in the fibre reinforced cement products of this invention, especially when the selected siliceous substance is calcined to at least 450°C prior to use.

The calcining or heat treating step has been found to induce or promote pozzolanicity in the mixture as well as usually decreasing the bulk density of the selected siliceous substance to advantage. We have found that this pozzolanicity offers significant advantages compared with prior art mixtures of cement and ground silica sand since these must be autoclaved in most cases to develop adequate physical properties and durability.

While the mixtures of the present invention may be autoclaved if desired, we have found that this is not usually necessary, this enabling a costly processing step commonly used in the prior art to be avoided.

In the methods of the present invention the mixture is substantially dry formed, and contains not more than 30% by weight of water. The selected siliceous substance has been found to contribute significantly to the dry forming step by promoting good flow in the mixture during formation and subsequent clamping of the formed matt prior to curing, this assisting in obtaining an even density profile in the finished product.

We have found that the mixture described herein may be formed using many conventional formers such as air formers, and those commonly used in the manufacture of particleboard and dry formed fireboard for example. Any suitable dry or semi-dry former may be used however.

After forming, the matt is compressed to stops or to a substantially pre-determined density and clamped for sufficient time to allow setting reactions to advance sufficiently to produce a handlable product. After clamping, the product which may still be frangible is allowed to post cure or condition in a suitable environment such as a humid or steam environment for example to further advance the setting reactions prior to trimming and/or finishing as required.

The matt may be clamped between cauls to allow initial setting reactions to advance sufficiently to produce a handlable product, or may be pressed directly in a suitable press which may be heated to accelerate the hydraulic cement setting reactions. In a preferred form of the invention a heated press is used to accelerate the hydraulic cement setting reactions. In a preferred form of the invention a heated press is used to compress the matt to a substantially pre-determined thickness and/or density to allow setting reactions to advance. The present plattens may be perforated to facilitate injection of saturated steam and/or chemicals to accelerate the hydraulic cement setting reactions.

The method of manufacturing fibre reinforced cement composites in accordance with the present invention wherein a mixture is prepared and formed into a matt and subsequently clamped or pressed without the need for de-watering a slurry has been found to have many advantages compared with prior art methods. Because there is no aqueous phase involved there is an opportunity to introduce water soluble additives at any stage of the process. In the prior art, Hatschek process for example, such additives could only be contained in the aqueous phase of the system.

In one form of the present invention hydraulic cement set modifiers may be added during the process. The set modifiers may be added during mixing of the components, during formation of the matter, to the matt itself prior to clamping or pressing, during clamping or pressing through perforated cauls or press plattens, or after clamping or pressing, such as prior to block stacking or by dipping the partially cured product in a suitable bath. For example, set modifiers may be added during the process to increase the setting rate of the hydraulic cement, and the rate may be further increased by application of heat and maintenance of humidity.

Suitable set modifiers such as the metal chlorides $CaCl_2$, $MgCl_2$, $FeCl_2$ and $AlCl_3$, alkali metal salt of carbonic acid, alkali metal silicate, alkali metal formate, a metal sulphate or a metal nitrate, a carboxylate, and mixtures of these compounds may be added during the process to increase the setting rate of the hydraulic cement.

In one form of the invention a suitable set modifier or mixture may be included in the matt prior to hot pressing for sufficient time to produce a rigid product when released from the hot press. The preferred hot pressing temperature is within the range 50°C to 95°C and the preferred pressing time is within the range 5 to 20 minutes.

The rigid product is preferably hot block stacked after release from the press and allowed to post cure in a stream or high humidity environment for between 2 and 24 hours prior to re-conditioning to ambient conditions. Longer post cure times may also be used if necessary or desired, and the pressing times may be increased to advantage as the product thickness increases.

The mixtures used for manufacturing fibre reinforced cement composites in accordance with the present invention may contain up to 66% of selected siliceous substance by weight on a dry solids basis, including mixtures of such substance. We have found that various amorphous forms of silica such as for example pyrogenic silica, silica fume, silica sol, silica gel, precipitated silica or a biogenic silica are particularly reactive with alkali metal hydroxide during hydration of hydraulic cement, and can be included to advantage in small amounts up to 10% in the mixtures for the purpose of accelerating the setting reactions.

In one form of the invention for example the selected siliceous substance may consist of up to 66% of the mixture by weight on a dry solids basis with up to 10% being selected from pyrogenic silica, silica fume, silica sol, silica gel, precipitated silica or a biogenic silica, with the remainder to 66% being selected from perlite, shirazu, pumice, volcanic tuff, diatomite, pozzolan, fly ash floaters, cenospheres and mixtures thereof.

The essential fibre reinforcement used in the present invention is chemical pulp lignocellulosic fibre such as soda or kraft pulp for example, which may be unbleached.

A preferred fibre is unbleached kraft pulp of softwood origin, but we do not exclude hardwood fibres which may also be used.

The chemical pulp lignocellulosic fibre may be included in the mixture in amounts of between 4% and 20% by weight on a dry solids basis, with a preferred range of between 5% and 10% by weight to suit the majority of purposes.

In addition to the essential chemical pulp lignocellulosic fibre reinforcement, any other suitable additional fibre may also be included, such as various polymer fibres, acrylic, polyester or polypropylene for example, and steel or carbon fibres for example.

Mixtures used for manufacturing fibre reinforced cement composites in accordance with the present invention may, in addition to the essential components described herein, also contain various fillers and additives such as clays, ground silica sand, non-metallic minerals, pigments, plasticisers, water reducing or retaining admixtures, waterproofing admixtures, shrink compensators, set accelerators, set retarders, gas forming agents, air entraining agents and polymer additives such as polymers and co-polymers of acrylamide and/or methacrylamide, and/or polyester and/or polyvinyl acetate and/or polystyrene for example, and methyl cellulose.

Due to the presence of selected siliceous substance, having a bulk density of not more than 1200 kg per cubic metre the mixtures used for manufacturing fibre reinforced cement composites in accordance with the present invention may be simply prepared in any suitable mixer such as a conventional blender or drum mixer for example, and the mixture may be prepared in several stages if desired, the selected siliceous substance and chemical pulp lignocellulosic fibre being mixed together, with or without water, and the hydraulic cement being mixed in at a later stage for example.

In a preferred embodiment of the invention, the mixture, after inclusion of the hydraulic cement is passed through at least one mixing stage wherein it is subjected to high shear or attrition which has been found beneficial in thoroughly dispersing the mixture components to advantage. Any suitable high shear or attrition machine may be used for this mixing stage including for example various mills and/or refiners such as hammer, ball, or rod mills for example, and either single or double disc refiners for example.

To permit the preparation of highly reactive mixtures, cooling may be employed. Any of the component materials including the water may be cooled for example, as may be the mixer or mixers and/or the formers for example, to reduce or inhibit premature reactions involving the hydraulic cement, prior to clamping or pressing. When used in conjunction with hot clamping or pressing, highly reactive cooled mixtures may be prepared and formed, and then hot pressed or clamped. We have found the mixtures to be fluid and easily formed even when cooled to below 0°C.

The invention will now be described by way of example only wherein the selected substance is a preferred selected siliceous substance, being perlite, shirazu, pumice, volcanic tuff, diatomite or pozzolan and mixtures thereof. We have found that these selected siliceous substances give excellent results in the present invention when used with a relatively fine particle size.

Preferably all of the particles will pass a 4.75mm screen, and more preferably a 0.6mm screen. For this reason fines may be employed to advantage both technically and economically. Perlite fines for example which are otherwise unused or of limited use for other purposes may be used to advantage in the present invention.

Preferably the selected siliceous substance has a bulk density of between 64 kg per cubic metre and 840 kg per cubic meter and more preferably between 64 kg per cubic metre and 192 kg per cubic metre, although densities up to 1200 kg per cubic metre may be used.

The selected siliceous substance is preferably calcined or heat treated to a temperature of at least 450°C prior to us, and more preferably to a temperature of between 450°C and 750°C.

The selected siliceous substance and the chemical pulp lignocellulosic fibre such as kraft pulp fibre, preferably with a Kappa number of between 20 and 40, and more preferably with a Kappa number of between 20 and 30 (which indicates a relatively low residual lignin content in the lignocellulosic fibre) may first be mixed together either completely dry or with some water, sufficient to give not more that 30% water by mass based upon the total dry solids of the complete mixture (including all dry ingredients). The hydraulic cement may be included with the mix of selected siliceous substance, or may be added at a later time in a further mixing stage, as may other components of the mixture if desired. With the hydraulic cement excluded until a later stage, the bulk of the components may be mixed together to form a non-reactive mixture which may be stored for an extended period in a bulk storage facility for example, to have hydraulic cement added in a second mixing stage soon before forming product on a suitable former or forming station.

The second mixing stage when used is preferably of a high shear type such as a disc refiner, or a plurality thereof arranged either in series or parallel with the material flow, or a special purpose built high shear or attrition type mixing machine preferably with the mixing disc or working parts of wear resistant materials such as silicon carbide, tungsten carbide, or other suitable materials. At least the mixing machinery in the second mixing stage may be cooled to remove frictional heat and any heat of hydration from the mixture to reduce premature reactions prior to the forming and clamping or pressing stages.

Components of the mixture may also be cooled, including the water used in mixing so that more rapid curing mixtures may be used, such as the addition of up to 10% aluminium chloride for example. The hydraulic cement, which may be predominantly Ordinary Portland Cement may in one form of the invention include a high alumina cement also, to increase the rate of reaction and thereby increase productivity. Other mixtures of hydraulic cement may also be used however, and chemicals such as alkali metal silicates, formates and carbonates, including mixtures thereof may also be included if desired. For example, the mixture may contain 30% and 60% of hydraulic cement in one form of the invention, with up to 20% of this cement being a high alumina cement. In a preferred mixture between 1% and 9% of the hydraulic cement is a high alumina cement.

We have found that particularly when the selected siliceous substance is calcined perlite, shirazu, pumice, volcanic tuff, diatomite, pozzolan and mixtures thereof with a bulk density of between 64 kg per cubic metre and 840 kg per cubic metre, and more preferably between 64 kg per cubic metre and 192 kg per cubic metre, the prepared mixture containing also the fibre such as kraft fibres, the hydraulic cement, and any other desired components exhibits good flow and forming properties, enabling the formation of a matt of uniform structure and density to be simply and effectively obtaining even when the mixture is cooled to below 0°C.

The matt may be formed for example onto re-cyclable-re-used cauls, or on a continuous belt for example adapted to convey the matt into the clamping station or a press. In one form of the invention, the cauls or continuous belt is fluid permeable to allow for admission of water, chemicals and/or steam to the matt prior to or during compression to density and thickness.

The matt may be compressed for example in a press with one or more daylights, and either held until sufficiently rigid to be handled or stacked for post curing and conditioning, or a stack of cauls with matts thereon may be clamped until sufficiently cured to enable separation of the cauls and further processing of the partially cured product. The cure may be completed in a steam atmosphere at atmospheric pressure or at elevated pressure in an autoclave if desired. A significant commercial advantage of the present invention however is that the cost of autoclaving can be avoided if desired for most purposes. An aspect of the cure may also include carbonation, employing contact with either carbon dioxide or an atmosphere containing carbon dioxide, or with a solution containing a soluble carbonate.

Mainly due to the good flow characteristics of the mixture during consolidation, building components such as tiles and corrugated sheet for roofing and the like may be produced using the present invention, as well as profiled and flat cladding sheets and interior ceiling panels of either flat or profiled designed, and other products.

Using the versatile process described herein we have manufactured products with a range of thickness, densities, and properties which fall well outside the capability of the prior art Hatschek process, and the products have been made simply and affectively without the need for an aqueous slurry mixing, transport and forming system.

A comparison between prior art Hatschek process product and an example of product made in accordance with this invention is shown in Table 1.

## TABLE 1

| | Example | |
| --- | --- | --- |
| | Present Invention | Prior art Hatschek |
| Density $(kg/m^3)$ | 1200 | 1450 |
| Modulus of Rupture (MPa) | 9.1 | 14.1 |
| Modulus of Elasticity (MPa) | 2600 | 9400 |
| Internal Bond (KPa) | 1450 | 543 |

The prior art Hatschek product was of a typical composition, containing Portland cement and ground silica as a matrix, with 7.0% softwood kraft pulp fibre. The poor inter-lamellar bonding (low internal bond) of the Hatschek material can be clearly seen.

The example product made in accordance with the present invention contained a mixture of 6% softwood kraft pulp, 25% expanded perlite (as the selected siliceous substance) 67.6% rapid hardening portland cement (as the hydraulic cement) and 1.4% Darex (Registered Trade Mark) (as a set modifier) to which 15% water by mass based upon the total dry solids contact of the mixture was added.

The dry solids including the softwood kraft fibre were first tumble mixed together in a tumble mixer. A drum mixer or low speed hammer mill may be used for this purpose. The result is a low density woolly or fluffed mixture which is easily transported on conveyor. After adding the water, the mixture was passed through a high shear mixing stage which in our example consisted of two passes through a standard double disk refiner. After passing the refiner, the water content of the mixture was not readily apparent as it was still very fluffy and easily conveyed, and readily discharged from bins and forming devices.

The apparently dry mixture was laid down in a desired thickness calculated to give an appropriate dry density in the finished panel product, and pressed at 1300 KPa pressure in a hot press for between 5 and 15 mintures at a platten temperature of between 95°C and 45°C. The panels which were still frangible when removed from the hot press were block stacked and post cured for 30 days in a high humidity environment prior to testing.

Unlike the Hatschek process, the process of the present invention is versatile and simple, and materials with a density range between 400 and 2000 kg per cubic metre can be produced on a single compact production line in a range of thicknesses. Textured or patterned surfaces may be generated by pressing against suitable cauls during the consolidation step.

If desired the chemical pulp lignocellulosic fibre may be pre-treated prior to incorporation in the mixture for the purpose of improving conditions at the fibre cement interface, particularly the interface bond and inhibiting the deleterious effects of lignin and various extractives thereat.

Prior art treatments with various aqueous solutions containing alkali metal silicates or phosphates, chromate, permanganate chloride or sulphate, aluminium chloide or sulphate, or borax for example.

The invention provides a useful process and products in the field of fibre reinforced cement composites which avoid or minimise many of the problems found at present in the prior art.

The invention has been described by way of example only. Modifications and variations will be apparent to those skilled in the art and may be made thereto, without departing from the scope of the invention, as defined in the appended claims.

## Claims

1. A method of forming fibre reinforced cement composites, including the steps of:
   a) preparing a mixture including dry solids and not more than 30% water by mass based upon the total mass of dry solids, said dry solids including at least one hydraulic cement, chemical pulp lignocellulosic fibre and at least one selected siliceous substance;
   b) forming and pressing said mixture to predetermined density and/or dimension; and
   c) maintaining conditions of high humidity for sufficient time to advance setting reactions in said mixture to product a fibre reinforced product.

2. A method as claimed in claim 1, wherein preparation of said mixture includes high shear and/or attrition mixing.

3. A method as claimed in claim 1 or claim 2, wherein said one or more selected siliceous substances are calcined prior to use by heat treating to a temperature of at least 450°C.

4. A method as claimed in any one of the preceding claims, wherein said forming and pressing step includes hot pressing.

A method as claimed in claim 4, wherein said hot pressing is conducted at a temperature within the range 50 to 95°C, for a pressing time within the range 5 to 20 minutes.

6. A fibre reinforced cement product, formed by a method as claimed in any one of the preceding claims.

7. A product as claimed in claim 6, wherein said dry solids include, by mass, 30% to 60% of said at least one hydraulic cement, 4% to 20% of said chemical pulp cellulosic fibre and 6% to 50% of said at least one selected siliceous substance.

8. A product as claimed in any one of the preceding claims 6 or 7, wherein said mixture includes said at least one selected siliceous substance, and at least one further more pozzolanic siliceous substance.

9. A product as claimed in any one of the preceding claims, wherein said chemical pulp lignocellulosic fibre has a kappa number of between 20 and 40.

10. As claimed in any one of the preceding claims 6-9, wherein said dry solids include 4% to 12% of chemical pulp lignocellulosic fibre.

11. A product as claimed in claim 6, including up to 66% of said one or more selected siliceous substances by weight on a dry solids basis.

12. A product as claimed in any one of the preceding claims 6-11, wherein said one or more selected siliceous substances are of a particle size such that said particles will pass a 4.75mm screen.

13. A product as claimed in any one of the preceding claims 6-12, wherein said selected siliceous substance has a bulk density between 64 and 192 kg per cubic metre.

14. A method as claimed in claim 1, substantially as hereindescribed.

15. A fibre reinforced cement product as claimed in claim 6, substantially as hereindescribed.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DD - A1 - 240 192 (TECHNISCHE UNIVERSITAT DRESDEN)  * Totality * | 1 | C 04 B 18/26  C 04 B 16/02  C 04 B 28/02 |
| X | GB - A - 2 170 141 (TAC CONSTRUCTION MATERIALS LIMITED)  * Totality * | 1 | |

**TECHNICAL FIELDS SEARCHED (Int. Cl.4)**

C 04 B

The present search report has been drawn up for all claims

| Place of search | Date of completion of the search | Examiner |
|---|---|---|
| VIENNA | 07-12-1988 | BECK |